# EUROPÄISCHE PATENTSCHRIFT

(11) **EP 1 261 412 B1**
(45) Veröffentlichungstag und Bekanntmachung des Hinweises auf die Patenterteilung: **12.11.2003**
(21) Anmeldenummer: 01911581.5
(22) Anmeldetag: 02.02.2001
(51) Int. Cl.: B01D 53/68

(54) **VERFAHREN ZUR RÜCKGEWINNUNG UND/ODER ABTRENNUNG VON SCHWEFELOXIFLUORIDEN AUS GASGEMISCHEN**
METHOD FOR RECLAMATION AND/OR SEPARATION OF SULPHUR OXYFLUORIDES FROM GAS MIXTURES
PROCEDE DE RECUPERATION ET/OU DE SEPARATION DE FLUORURES D'OXYDE DE SOUFRE A PARTIR DE MELANGES GAZEUX

(30) Priorität: 08.02.2000 DE 10005456
(43) Veröffentlichungstag der Anmeldung: 04.12.2002
(73) Patentinhaber: Solvay Fluor und Derivate GmbH, 30173 Hannover (DE)
(72) Erfinder: BELT, Heinz-Joachim, 30938 Burgwedel (DE); PITTROFF, Michael, 30161 Hannover (DE); RIELAND, Matthias, 30559 Hannover (DE); SCHWARZE, Thomas, 31275 Ahlten (DE)
(74) Vertreter: Kulik, Angelika
(86) Internationale Anmeldenummer: EP0101136
(87) Internationale Veröffentlichungsnummer: WO01058569

(56) Entgegenhaltungen:
- DE-A- 19 646 995

## Beschreibung

Die Erfindung betrifft ein Verfahren zur Rückgewinnung bzw. Abtrennung von Schwefeloxifluoriden aus Gasgemischen, insbesondere zur Rückgewinnung von Sulfurylfluorid (SO₂F₂) oder Thionylfluorid (SOF₂) aus damit kontaminierter Luft oder Abluft.

Die DE 197 08 669 beschreibt ein Verfahren zur Begasung von Räumen durch Einleiten eines Begasungsmittels und kontinuierlicher Ableitung der Behandlungsatmosphäre, wobei das Begasungsmittel z. B. in einem Adsorber abgetrennt werden kann und nach Desorption wiederverwendbar ist. Als Adsorptionsmittel werden Kohlepartikel oder Aluminiumoxidpartikel und als Begasungsmittel u. a. Sulfurylfluorid erwähnt. Sulfurylfluorid kann und wird als Schädlingsbekämpfungsmittel eingesetzt. Beispielsweise können mit SO₂F₂ Schädlinge in frischem oder verbautem Holz (Holzwürmer, Pilze), in Vorratsräumen oder in Mühlen (Kornkäfer) oder Textilien bekämpft werden. Dabei wird SO₂F₂ allein oder in Kombination mit anderen bekannten Schädlingsbekämpfungsmitteln eingesetzt. Nach beendeter Begasung wird üblicherweise das SO₂F₂ thermisch zersetzt oder durch Lauge zerstört. Die dabei anfallenden Sekundärprodukte können häufig nur auf Sondermülldeponien entsorgt werden.

Es ist wünschenswert, derartige Gasgemische mit dem Ziel der Wiederverwendbarkeit der Schwefeloxifluoride aufzuarbeiten.

Aufgabe der vorliegenden Erfindung ist ein Verfahren zur Trennung von Gasgemischen bereitzustellen, bei dem nahezu keine umweltschädigenden Bestandteile der Gasgemische in die Atmosphäre gelangen und die abgetrennten Komponenten wiederverwendbar sind. Darüber hinaus sollen keine Sekundärprodukte, die entsorgt werden müssen, anfallen.

Erfindungsgemäß werden schwefeloxifluoridhaltige Gasgemische zur Rückgewinnung der Schwefeloxifluoride mit Adsorbenzien und/oder Membranen kontaktiert und die abgetrennten Schwefeloxifluoride je nach Bedarf, gegebenenfalls nach einer Desorption, einer Wiederverwendung zugeführt. Die an Schwefeloxifluorid verarmte oder befreite Luft aus dem Gasgemisch kann bedenkenlos in die Atmosphäre abgelassen werden.

Als Schwefeloxifluoride im Sinne der Erfindung sind insbesondere SO₂F₂, SOF₄, SOF₂ zu verstehen. Es können Gasgemische mit einem Schwefeloxifluoridgehalt ab 5 ppmv bzw. 20 mg/m³ getrennt werden.

Erfindungsgemäß wird das Gasgemisch durch mindestens eine Adsorptionsstufe und/oder Membranstufe enthaltend oder bestehend aus Zeolithen, die ein SiO₂/Al₂O₃-Verhältnis, dem sogenannten Modul, >10 vorzugsweise >100, eine Partikelgröße >1 mm, vorzugsweise >2 mm, und einen Porendurchmesser von 0,4 bis 0,7 nm, vorzugsweise 0,5 bis 0,65 nm, aufweisen, geleitet, wobei die Partikelgröße für den Zeolith, der als Adsorbens eingesetzt wird, zutrifft.

Gut geeignet sind Zeolithe, die einer Dealuminierung unterworfen wurden, um das Al₂O₃ im Gitter durch SiO₂ zu ersetzen, wobei dadurch das Modul erhöht wird. Gleichzeitig werden dadurch die polaren Kräfte schwächer und damit wird die Hydrophobie des Zeolithen erhöht (W. Otten et al., Chem.-Ing. Tech. 64 (1992) Nr. 10, S. 915 - 925).

Es ist im Sinne der Erfindung, die Zeolithe sowohl als lockere Schüttung in Adsorbersäulen oder als Membran einzusetzen, wobei eine Kombination von Adsorbtions- und Membranstufe ebenfalls im Sinne der Erfindung ist.

Die Adsorption wird bei einem Druck von maximal 15 atm. bei 21 °C, durchgeführt.

In einer Ausführungsform des erfindungsgemäßen Verfahrens wird eine Schädlingsbekämpfung mit SO₂F₂ in geschlossenen Behältnissen oder Räumen durchgeführt. Die als Gasgemisch vorliegende SO₂F₂-haltige Atmosphäre (0,05 bis 10 Vol.-% SO₂F₂) der Behältnisse oder Räume wird nach beendeter Begasung aus diesen abgeleitet und zur Rückgewinnung des SO₂F₂ mit den Adsorbenzien und/oder den Membranen kontaktiert. Die an SO₂F₂ verarmte Luft aus dem Gasgemisch kann dann in die Atmosphäre abgelassen werden.

In einer anderen Ausführungsform wird das Gasgemisch über zwei oder mehr Adsorptionsstufen und/oder Membranstufen geleitet.

Das adsorbierte Schwefeloxifluorid kann durch Temperaturerhöhung und/oder Druckerniedrigung vom Sorptionsmittel desorbiert werden und einer Wiederverwendung zugeführt werden.

Die Regenerierung der Adsorbenzien (Desorption) erfolgt in bekannter Weise durch Wärmezuführung und/oder Druckabsenkung.

Die Desorption erfolgt im Temperaturbereich von 20 bis 300 °C, vorzugsweise bei einer Temperatur >100 °C. Es hat sich als günstig erwiesen, die Desorption bei erniedrigtem Druck ablaufen zu lassen. In einer Ausführungsform wird zur Desorption die Adsorbersäule nach der Erwärmung mit einem technischen Vakuum von bis zu 10⁻³ bar beaufschlagt.

Sofern das Gasgemisch zusätzlich Verunreinigungen enthält, kann vor der Adsorption eine Reinigung durch z. B. Filtration oder Adsorption mit anderen Adsorbenzien erfolgen. Es ist ebenfalls im Sinne der Erfindung, das Gasgemisch zunächst, z. B. durch Trocknen mit geeigneten Trockenmitteln von Wasser zu befreien und danach durch die Adsorber bzw. Membran zu leiten.

Die Vorrichtung zur Durchführung des erfindungsgemäßen Verfahrens umfaßt mindestens einen Adsorber mit einer Schüttung von Zeolithen mit einem Modul >10, vorzugsweise >100, einer Partikelgröße >1 mm, vorzugsweise >2 mm und einem Porendurchmesser von 0,4 bis 0,7 nm, vorzugsweise 0,5 bis 0,65 nm und/oder mindestens eine Membran, bestehend oder enthaltend einen Zeolithen mit einem Modul 10, vorzugsweise 100 und einem Porendurchmesser von 0,4 bis 0,7 nm, vorzugsweise 0,5 bis 0,65 nm. Vor dem Adsorber bzw. der Membran ist ein Kompressor angeordnet. Die Vorrichtung umfaßt mindestens eine Zuführungsleitung für das Gasgemisch, eine Leitung zur Abführung des Gases in die Atmosphäre sowie Meß-, Regelungs- und Kontrolleinrichtungen.

In einer bevorzugten Ausführungsform hat es sich als günstig erwiesen, mindestens zwei Adsorberstufen, die jeweils auch mehrere Adsorbersäulen umfassen können, zu benutzen, da sie eine kontinuierliche Arbeitsweise gestatten, sofern sie parallel geschaltet sind. Durch geeignete Regelungs- und Steuerungseinrichtungen ist der wechselseitige Betrieb von Adsorption und Desorption gewährleistet.

In einer Ausführungsform der Erfindung wird das zu trennende Gasgemisch mittels Pumpe oder Kompressor über eine Zuführungsleitung in die Adsorberstufe eingeleitet.

Die Anzahl und Kapazität der Adsorber richtet sich danach, ob ein Gas mit hohem oder niedrigem Schwefeloxifluorid-Gehalt behandelt werden soll. Die Kapazität der Adsorber kann beispielsweise durch Erhöhung des Adsorbervolumens der einzelnen Adsorbersäulen oder durch die Anzahl der Adsorbersäulen erhöht werden.

Bevor das abgereicherte Gas in die Atmosphäre abgelassen wird, wird die Zusammensetzung des Gases mittels einer Kontrolleinrichtung, vorzugsweise mittels einer IR-Analyseeinrichtung analysiert und kontrolliert.

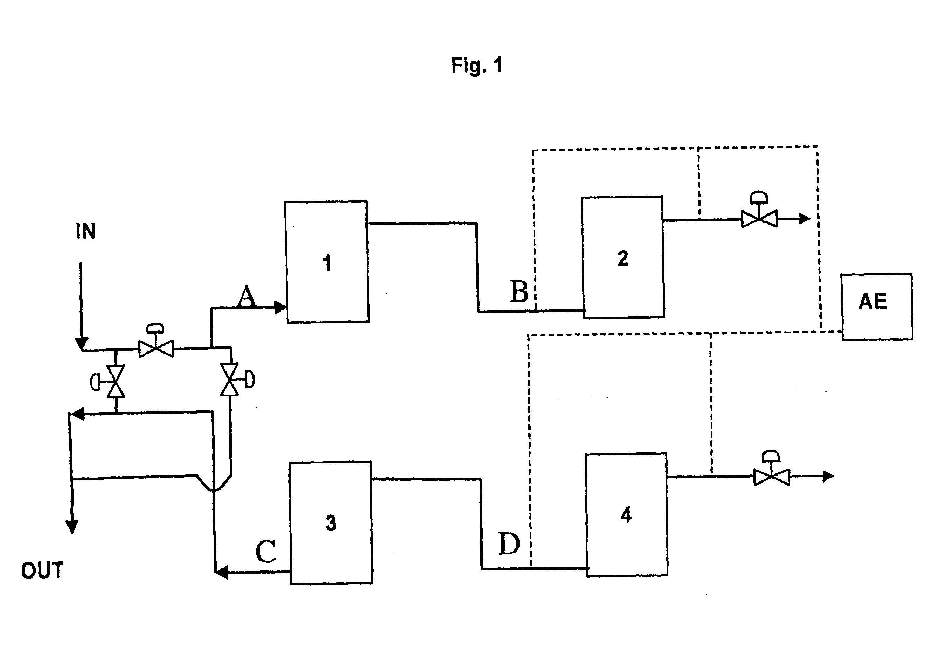

Die Erfindung wird anhand der Figur 1 näher erläutert.

Fig. 1 zeigt die schematische Zeichnung einer Anlage mit parallel gestalteten Adsorberstufen mit jeweils 2 in Reihe geschalteten Adsorbersäulen. Diese Anlage ist sehr kompakt und eignet sich zum Aufbau auf der Ladefläche beispielsweise eines Lkw. Der Einfachheit halber sind die Kompressoren vor jeder Adsorbersäule weggelassen. Ebenso sind die Heizeinrichtungen, Vakuumpumpen, Meß- und Regelvorrichtungen usw. nicht eingezeichnet.

Die Adsorbersäulen sind mit einer lockeren Schüttung der obengenannten Zeolithe gefüllt.

Die Anlage ist so geschaltet, daß für den kontinuierlichen Betrieb eine Adsorberlinie adsorbiert und die andere Adsorberlinie regeneriert wird.

Das Gasgemisch mit einem Druck von max. 20 bar (abs.) wird über die Leitung A in den Adsorber 1 eingeleitet. Über die Leitung B wird das den Adsorber 1 verlassende Gasgemisch in den Adsorber 2 geführt. Bevor das den Adsorber 2 verlassende Gasgemisch, das kein oder nur unbedeutende Mengen an Schwefeloxifluorid enthält, in die Atmosphäre abgegeben wird, wird die Zusammensetzung des Gasgemisches in der Kontrolleinrichtung AE (vorzugsweise eine IR-Analyseeinrichtung) analysiert und kontrolliert.

Gleichzeitig werden die Adsorber 3 und 4, die über die Leitung D miteinander verbunden sind, regeneriert, d. h. das adsorbierte Gasgemisch wird desorbiert.

Die Desorption erfolgt durch Druck, und Temperaturänderung, indem die Adsorbersäulen beheizt werden bzw. mit Hilfe von Vakuumpumpen der Druck in den Adsorbersäulen verändert wird.

Das desorbierte stark mit Schwefeloxifluorid angereicherte Gasgemisch wird im Vorratsbehälter aufgefangen und steht somit einer weiteren Nutzung zur Verfügung.

In einer anderen Ausführungsform des Verfahrens durchläuft das zu trennende Gas eine Kombination aus Membrantrennstufe und Adsorptionstrennstufe.

Der Druck auf der Eingangsseite der Membran liegt üblicherweise höher als der Umgebungsdruck. Vor der Membran ist eine Pumpe oder ein Kompressor angeordnet. Das zu trennende Gasgemisch wird mit einem Druck bis zu 20 bar aufgegeben. Das die Membranstufe verlassende Retentat, mit einem erhöhten Gehalt an Schwefeloxifluorid gelangt in einen Auffangbehälter und kann z. B. nach Verflüssigung mit einem Kompressor sofort wiederverwendet werden.

Das Permeat wird zur weiteren Auftrennung in mindestens einen Adsorber geleitet. Gegebenenfalls kann das Permeat vor dem Eintritt in den Adsorber komprimiert werden.

Es ist ebenfalls denkbar, daß das Retentat der ersten Membranstufe in eine zweite Membranstufe eingeleitet wird. Das aus dieser zweiten Membranstufe resultierende Permeat kann in die erste Membranstufe rückgeführt werden oder in die nachgeschalteten Adsorberstufen geleitet werden.

Die Membran kann in üblicher Form vorliegen. Das Membranmaterial enthält oder besteht aus einem Zeolithen mit einem Modul >10, vorzugsweise >100 und einem Porendurchmesser von 0,4 bis 0,7 nm, vorzugsweise 0,5 bis 0,65 nm.

Die Vorrichtung kann auch in mobiler Form, beispielsweise auf der Ladefläche eines Kraftfahrzeuges, aufgebaut sein, so daß das erfindungsgemäße Verfahren an Ort und Stelle durchgeführt werden kann.

Die folgenden Beispiele sollen die Erfindung erläutern, ohne sie in ihrem Umfang einzuschränken.

Für die nachfolgenden Beispiele wurden folgende Zeolithe als Adsorbens eingesetzt:

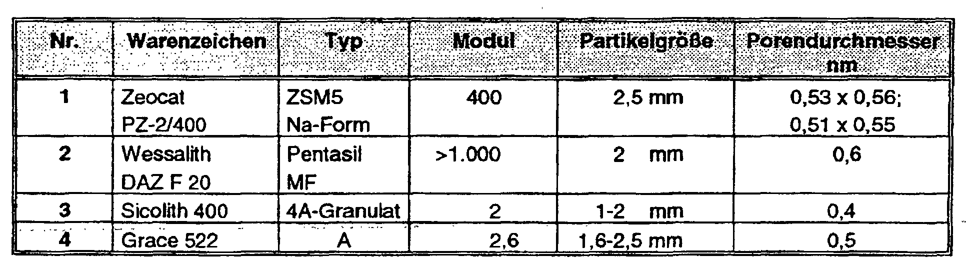

### Beispiel 1:

Ein SO₂F₂/N₂-Gemisch mit 2,47 Vol.-% SO₂F₂ wurde über einen Adsorber geleitet, der eine Schüttung von 320 g Adsorbens enthielt.

Als Adsorbens wurde Zeocat PZ-2/400 (Hersteller: Chemie Uetikon GmbH, Uetikon (Schweiz)) verwendet.

Das Gasgemisch wurde 54 min. mit einer Durchflußrate von 3,13 l/min. über das Adsorbens geleitet bis eine maximale Emissionskonzentration an SO₂F₂ von 20 ppmv erreicht war.

Durch Differenzwägung wurde die Adsorptionsleistung ermittelt.
- Ergebnis:: Es wurden 23,28 g Gas adsorbiert,
davon 18,78 g SO₂F₂.

### Beispiel 2:

Ein SO₂F₂/N₂-Gemisch mit 2,47 Vol.-% SO₂F₂ wurde über einen Adsorber geleitet, der eine Schüttung von 360 g Adsorbens enthielt. Als Adsorbens wurde Wessalith DAZ F20 (Hersteller: Degussa AG) verwendet.

Das Gasgemisch wurde 44 min. mit einer Durchflußrate von 3,63 l/min, über das Adsorbens geleitet bis eine maximale Emissionskonzentration an SO₂F₂ von 147 ppm nach 51 min. erreicht war. Die Adsorberleistung wurde durch Differenzwägung ermittelt.
- Ergebnis:: Es wurden 23,4 g Gas adsorbiert,
davon 17,73 g SO₂F₂.

### Beispiel 3: (Vergleichsbeispiel)

### Versuchsdurchführung analog Beispiel 1

Als Adsorbens wurde Sicolith 400 (Hersteller: Solvay) verwendet.

Ergebnis: keine meßbare Gasmenge wurde adsorbiert.

### Beispiel 4: (Vergleichsbeispiel)

### Versuchsdurchführung analog Beispiel 2.

Als Adsorbens wurde Grace 522 (Hersteller: W. R. Grace, Nd. Worms) verwendet.

Ergebnis: keine meßbare Gasmenge wurde adsorbiert.

Die Ergebnisse zeigen, daß mit Zeolithen, die nicht dem erfindungsgemäßen Auswahlkriterium bezüglich Modul, Partikelgröße und Porendurchmesser entsprechen, keine Adsorption von z. B. SO₂F₂ möglich ist.

## Patentansprüche

1. Verfahren zur Rückgewinnung oder Abtrennung von Schwefeloxifluoriden aus Gasgemischen, wobei das Gasgemisch über Adsorbenzien oder Membranen geleitet wird, **dadurch gekennzeichnet, daß** das Gasgemisch über mindestens eine Adsorptions- und/oder Membranstufe, enthaltend oder bestehend aus Zeolithen mit einem Modul >10 und einem Porendurchmesser von 0,4 bis 0,7 nm, geleitet wird, und die abgetrennten Schwefeloxifluoride gegebenenfalls nach einer Desorption oder direkt einer Nutzung zur Verfügung stehen.

2. Verfahren nach Anspruch 1, **dadurch gekennzeichnet, daß** als Adsorbens ein Zeolith mit einem Modul >10, einer Partikelgröße >1 mm und einem Porendurchmesser von 0,4 bis 0,7 nm verwendet wird.

3. Verfahren nach Anspruch 1, **dadurch gekennzeichnet, daß** als Adsorbens ein Zeolith mit einem Modul >100, einer Partikelgröße >2 mm und einem Porendurchmesser von 0,5 bis 0,65 nm verwendet wird.

4. Verfahren nach Anspruch 1, **dadurch gekennzeichnet, daß** die Membran einen Zeolithen mit einem Modul >100 und einem Porendurchmesser von 0,5 bis 0,65 nm enthält oder daraus besteht.

5. Verfahren nach Anspruch 1, **dadurch gekennzeichnet, daß** die Adsorption bei einem Druck von maximal 20 atm (bei 21 °C) durchgeführt wird.

6. Verfahren nach Anspruch 1, **dadurch gekennzeichnet, daß** ein Schwefeloxifluorid/Luft-Gemisch mit einem Schwefeloxifluoridgehalt von wenigstens 5 ppmv bzw. 20 mg/m³ eingesetzt wird.

7. Verfahren nach Anspruch 1, **dadurch gekennzeichnet, daß** 2 oder mehr Adsorptions- und/oder Membranstufen verwendet werden.

8. Verfahren nach Anspruch 1, **dadurch gekennzeichnet, daß** die Schwefeloxifluoride durch Temperaturerhöhung und/oder Druckerniedrigung vom Sorptionsmittel desorbiert werden.

9. Verfahren nach Anspruch 8, **dadurch gekennzeichnet, daß** die Desorption im Temperaturbereich von 20 °C bis 300 °C, vorzugsweise bei einer Temperatur >100 °C erfolgt.

10. Verfahren nach Anspruch 8, **dadurch gekennzeichnet, daß** die Desorption bei einem Druck von bis zu 10⁻³ bar erfolgt.

11. Verfahren nach Anspruch 1 bis 10, **dadurch gekennzeichnet, daß** das Verfahren in einer mobilen Vorrichtung durchgeführt werden kann.

## Claims

1. A method for the recovery or separation of sulphur oxyfluorides from gas mixtures, wherein the gas mixture is passed over adsorbents or membranes, **characterised in that** the gas mixture is passed over at least one adsorption and/or membrane stage, containing or consisting of zeolites having a modulus >10 and a pore diameter of 0.4 to 0.7 nm, and the sulphur oxyfluorides which are separated off are available for use optionally after desorption or directly.

2. A method according to Claim 1, **characterised in that** a zeolite having a modulus >10, a particle size >1 mm and a pore diameter of 0.4 to 0.7 nm is used as adsorbent.

3. A method according to Claim 1, **characterised in that** a zeolite having a modulus >100, a particle size >2 mm and a pore diameter of 0.5 to 0.65 nm is used as adsorbent.

4. A method according to Claim 1, **characterised in that** the membrane contains or consists of a zeolite having a modulus >100 and a pore diameter of 0.5 to 0.65 nm.

5. A method according to Claim 1, **characterised in that** the adsorption is performed at a pressure of at most 20 atm (at 21°C).

6. A method according to Claim 1, **characterised in that** a sulphur oxyfluoride/air mixture having a sulphur oxyfluoride content of at least 5 ppmv or 20 mg/m³ is used.

7. A method according to Claim 1, **characterised in that** 2 or more adsorption and/or membrane stages are used.

8. A method according to Claim 1, **characterised in that** the sulphur oxyfluorides are desorbed from the solvent by increasing the temperature and/or reducing the pressure.

9. A method according to Claim 8, **characterised in that** the desorption takes place in a temperature range from 20°C to 300°C, preferably at a temperature >100°C.

10. A method according to Claim 8, **characterised in that** the desorption takes place at a pressure of up to 10⁻³ bar.

11. A method according to Claims 1 to 10, **characterised in that** the method can be performed in a mobile apparatus.

## Revendications

1. Procédé de récupération ou de séparation de fluorures d'oxyde de soufre à partir de mélanges gazeux, dans lequel le mélange gazeux est dirigé sur des adsorbants ou des membranes, **caractérisé en ce que** le mélange gazeux est dirigé sur au moins un étage d'adsorption et/ou à membrane, contenant des zéolithes ou constitués de celles-ci, ayant un module > 10 et un diamètre de pores de 0,4 à 0,7 nm, et les fluorures d'oxyde de soufre séparés sont disponibles pour une utilisation le cas échéant après une désorption ou directement.

2. Procédé selon la revendication 1, **caractérisé en ce qu'**une zéolithe ayant un module >10, une grosseur de particules > 1 mm et un diamètre de pores de 0,4 à 0,7 nm est utilisée comme adsorbant.

3. Procédé selon la revendication 1, **caractérisé en ce qu'**une zéolithe ayant un module > 100, une grosseur de particules > 2 mm et un diamètre de pores de 0,5 à 0,65 nm est utilisée comme adsorbant.

4. Procédé selon la revendication 1, **caractérisé en ce que** la membrane contient ou est constituée d'une zéolithe ayant un module > 100 et un diamètre de pores de 0,5 à 0,65 nm.

5. Procédé selon la revendication 1, **caractérisé en ce que** l'adsorption est réalisée à une pression de 20 atm maximum (à 21°C).

6. Procédé selon la revendication 1, **caractérisé en ce qu'**on met en oeuvre un mélange fluorure d'oxyde de soufre/air ayant une teneur en fluorure d'oxyde de soufre d'au moins 5 ppmv, ou 20 mg/m³.

7. Procédé selon la revendication 1, **caractérisé en ce que** 2 étages d'adsorption et/ou à membrane, ou plus, sont utilisés.

8. Procédé selon la revendication 1, **caractérisé en ce que** les fluorures d'oxyde de soufre sont désorbés par élévation de la température et/ou abaissement de la pression du moyen de sorption.

9. Procédé selon la revendication 8, **caractérisé en ce que** la désorption est réalisée dans la gamme de température allant de 20°C à 300°C, de préférence à une température > 100°C.

10. Procédé selon la revendication 8, **caractérisé en ce que** la désorption est réalisée à une pression allant jusqu'à 10⁻³ bar.

11. Procédé selon les revendications 1 à 10, **caractérisé en ce que** le procédé peut être mis en oeuvre dans un dispositif mobile.
